# EUROPÄISCHE PATENTSCHRIFT

(11) **EP 2 888 135 B1**
(45) Veröffentlichungstag und Bekanntmachung des Hinweises auf die Patenterteilung: **09.08.2017**
(21) Anmeldenummer: 13750642.4
(22) Anmeldetag: 16.08.2013
(51) Int. Cl.: B60R 21/2338

(54) **GASSACKMODUL MIT EINER DREIDIMENSIONAL AUFGEBAUTEN VENTEINRICHTUNG**
AIRBAGMODULE WITH A THREE DIMENSIONAL VENTING DEVICE
MODULE DE SAC GONFLABLE À AGENCEMENT D'ÉVENT CONÇU EN TROIS DIMENSIONS

(30) Priorität: 24.08.2012 DE 102012107802
(43) Veröffentlichungstag der Anmeldung: 01.07.2015
(73) Patentinhaber: Autoliv Development AB, 447 83 Vårgårda (SE)
(72) Erfinder: GOERTZ, Christoph, 85244 Röhrmoos (DE)
(74) Vertreter: Feucker, Max Martin
(86) Internationale Anmeldenummer: PCT/EP2013/002463
(87) Internationale Veröffentlichungsnummer: WO 2014/029482

(56) Entgegenhaltungen:
- EP-A2- 1 790 538
- DE-A1-102007 045 549
- DE-A1-102009 018 159
- US-B2- 7 347 450

## Beschreibung

Die Erfindung betrifft ein Gassackmodul zum Einbau in ein Kraftfahrzeug mit einem aus einem Gassackgewebe bestehenden Gassack und mit einer Aufblasvorrichtung für den vor Auslösung gefalteten Gassack, wobei der Gassack einen vor dem Aufblasen des Gassackes mittels einer Abdeckung verschlossenen Ventilationsbereich aufweist und ein mit seinem einen Ende im Inneren des Gassackes lösbar an dem Gassackmodul oder an einem fahrzeugfesten Teil gehaltertes und mit seinem anderen Ende an der Abdeckung befestigtes Fangband vorgesehen ist derart, dass bei sich aufblasendem Gassack vor der Freigabe des lösbar gehalterten Endes des Fangbandes das Fangbänd die Abdeckung in der den Ventilationsbereich verschließenden Position hält, wobei die Abdeckung über wenigstens einen Teilbereich ihres Umfangs fest mit dem Gassackgewebe verbunden und um diesen Teilbereich aufklappbar ist derart, dass bei Freigabe des Fangbandes die Abdeckung durch Einwirkung des aus dem Ventilationsbereich ausströmenden Gases aufgeklappt wird und den Ventilationsbereich des Gassackes freigibt, wobei der nicht mit dem Gassack verbundene Umfangsbereich der Abdeckung in dessen Abdeckstellung in einer lösbaren Überlappung mit einem Teil des Gassackes gehalten ist.

Ein Gassackmodul mit den vorgenannten Merkmalen ist in der EP 1 790 538 A2 beschrieben. Soweit es bei der an dem gattungsgemäßen Gegenstand ausgebildeten adaptiven und den Ventilationsbereich bildenden Ventilationsöffnung darum geht, die Ventilationsöffnung zunächst verschlossen zu halten und die Freigabe der Ventilationsöffnung erst zu einem bestimmbaren Zeitpunkt während des Aufblasens des Gassackes oder nach dessen Aufblasen zu ermöglichen, besteht bei dem bekannten Gassackmodul die Abdeckung aus zwei außen auf dem Gassackgewebe angebrachten und die Ventilationsöffnung überdeckenden Gewebezuschnitten, die einander überlappen. Damit die Gewebezuschnitte zunächst in ihrer die Ventilationsöffnung verschließenden Ausgangslage verbleiben, ist ein Fangband vorgesehen, welches mit einem Ende an einer im Inneren des Gassackes angeordneten modulseitigen Haltevorrichtung festgelegt ist. Das andere Ende des Fangbandes ist über eine außerhalb der die Abdeckung bildenden Gewebezuschnitte angeordnete Öffnung auf die Außenseite des Gassackes herausgeführt und an dem äußeren der beiden einander überlappenden Gewebezuschnitte befestigt. Die Länge des Fangbandes ist dabei so bemessen, dass bei aufgeblasenem Gassack der äußere Gewebezuschnitt durch das Fangband in seiner gestreckten Lage gehalten ist und dabei auch den darunter liegenden inneren Gewebezuschnitt gegen das Gassackgewebe presst, so dass die Ventilationsöffnung durch die beiden derart fixierten Gewebezuschnitte verschlossen ist. Erst nach der Aktivierung der Haltevorrichtung mit einer Freigabe des daran festgelegten Fangbandendes ermöglicht das durch die Öffnung rutschende Fangband ein selbsttätiges Aufklappen der beiden einander überlappenden Gewebezuschnitte nach außen nach Art von Vogelschwingen, so dass dadurch die Ventilationsöffnung freigegeben ist.

Mit dem bekannten Gassackmodul ist der Nachteil verbunden, dass die zusätzlich zur Ventilationsöffnung erforderliche und der Durchführung des Fangbandes dienende Öffnung eine von vornherein undichte Stelle im Gassack ausbildet, die auch bei zunächst geschlossen zu haltender Ventilationsöffnung eine unerwünschte Ventilation des Gassackes ermöglicht. Aufgrund des erforderlichen Hindurchfädelns des Fangbandes durch besagte Öffnung ist zudem auch die Montage des Gassackes erschwert. Schließlich kann das Öffnungsverhalten der flach aufeinander gepressten Gewebezuschnitte bei Freigabe des Fangbandes aufgrund des lediglich über den Querschnitt der Ventilationsöffnung einwirkenden Gasdruckes unzureichend sein.

Der Erfindung liegt daher die Aufgabe zugrunde, bei einem Gassackmodul mit den gattungsgemäßen Merkmalen die Abdeckung der Ventilationsöffnung sowie deren Freigabe in einer einfachen und wirkungsvollen Weise auszugestalten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Abdeckung als dreidimensionaler Körper ausgebildet ist dass das im Inneren des Gassackes verlaufende Fangband innerhalb des von der Abdeckung erfassten Bereichs an dem dreidimensionalen Körper angeschlagen ist, so dass der dreidimensionale Körper sich schon vor dessen Freigabe durch das Fangband aufgrund seiner dreidimensionalen Ausbildung durch das durch den Ventilationsbereich strömende Gas als dreidimensionaler Körper entfaltet und in seine Form aufgeblasen wird, wobei sich ein ausreichend großer Gasdruck aufbaut, der im Falle der Freigabe durch das Fangband ein reibungsloses Wegklappen des dreidimensionalen Körpers mit einer vollständigen Freigabe des Ventilationsbereichs bewirkt.

Es ist vorteilhaft, dass das Fangband jedenfalls innerhalb des von der Abdeckung erfassten Bereichs bis zu dem dreidimensionalen Körper geführt und hier daran angeschlagen ist. Damit ist eine Dichtigkeit der Abdeckung auch hinsichtlich der Einbeziehung des Fangbandes in den Aufbau des Gassackes gewährleistet.

Es kommt in vorteilhafter Weise hinzu, dass aufgrund der dreidimensionalen Ausbildung der Abdeckung für den Ventilationsbereich im Gegensatz zu der bei einer flächig ausgebildeten Abdeckung auftretenden sehr hohen Beanspruchung des die Abdeckung haltenden Fangbandes eine bessere Verteilung der auf die Abdeckung und damit auf das die Abdeckung haltende Fangband einwirkenden Kräfte erfolgt. Diese auf die Abdeckung einwirkenden Kräfte verteilen sich aufgrund der räumlichen Aufnahme in verschiedene Richtungen, wodurch auch das an dem Gassack befestigte Abdeckungsgewebe mit in die Kraftableitung einbezogen und das Fangband entsprechend entlastet ist.

Erfindungsgemäß besteht der klappbar eingerichtete dreidimensionale Körper entsprechend dem Material des Gassackes aus einem textilen Material und ist beispielsweise durch Festlegung des Zuschnitts, durch Falten und Vernähen aus einem flachen Material derart gestaltet, dass sich bei einem "Aufblasen" seine dreidimensionale Form einstellt. Damit kann der an dem Gassack angebrachte dreidimensionale Körper beim Einfalten des Gassackes in das Gassackmodul ohne Problem mit eingefaltet werden und stört daher die Unterbringung des Gassackes in einem zugehörigen Gassackmodul nicht.

In einer ersten Ausführungsform der Erfindung ist vorgesehen, dass der klappbar eingerichtete dreidimensionale Körper mit einem umlaufenden äußeren Randbereich auf der Innenseite des Gassackes innenseitig gegen das Gassackgewebe anliegt und sich beim Aufblasen des Gassackes durch die Ventilationsöffnung nach außen erstreckt, wobei der äußere Randbereich auf einem Teilbereich des Umfangs des klappbar eingerichteten dreidimensionalen Körpers fest mit dem Gassackgewebe verbunden und der nicht mit dem Gassackgewebe verbundene Teilbereich des Randbereichs die lösbare Überlappung mit dem Gassackgewebe bildet und dass das Fangband innenseitig an dem nicht mit dem Gassackgewebe verbundenen Teilbereich oder dem dreidimensionalen Körper angeschlagen ist.

Wirkt beim Aufblasen des Gassackes ein entsprechender Gasdruck ein, so wird einerseits der dreidimensionale Körper aufgefaltet und erstreckt sich durch die Ventilationsöffnung nach außerhalb und andererseits presst der Gasdruck den nicht mit dem Gassackgewebe verbundenen Randbereich des dreidimensionalen Körpers von innen her gegen das Gassackgewebe, so dass dadurch der durch das Fangband in der Abdeckstellung fixierte dreidimensionale Körper in einer abgedichteten Weise an dem Gassackgewebe festgelegt ist. Da insoweit der dreidimensionale Körper mit seinem die lösbare Überlappung bildenden Teilbereich seines Randbereichs jeweils im Inneren des Gassackes liegt, ist es unproblematisch, in diesem Bereich das zugeordnete Ende des Fangbandes von der Innenseite des Gassackes her an dem nicht mit dem Gassackgewebe verbundenen Randbereich bzw. dem dreidimensionalen Körper anzuschlagen. Im Einzelnen kann hierbei vorgesehen sein, dass der klappbar eingerichtete dreidimensionale Körper als Tetraeder mit einer dreieckigen Grundfläche ausgebildet ist, wobei eine Dreieckseite des Tetraeders mit dem Gassackgewebe fest verbunden und längs der beiden weiteren Dreieckseiten jeweils die lösbare Überlappung mit dem Gassackgewebe angeordnet ist. Im Hinblick auf die Führung des Fangbandes kann vorgesehen sein, dass auf der Innenseite des Gassackgewebes in dessen dem Anschlag des Fangbandes an dem dreidimensionalen Körper benachbarten Bereich eine das Fangband aufnehmende Führung angeordnet ist.

In einer alternativen Ausführungsform der Erfindung ist vorgesehen, dass der klappbar eingerichtete dreidimensionale Körper auf der Außenseite des Gassackes angebracht ist und dass zusätzlich zu dem klappbar eingerichteten dreidimensionalen Körper ein zweiter ebenfalls auf der Außenseite des Gassackes angebrachter feststehender dreidimensionaler Körper vorgesehen und mit dem Gassackgewebe längs einer den Ventilationsbereich auf dem von der Verbindung des Gassackgewebes mit dem klappbar eingerichteten dreidimensionalen Körper nicht erfassten Umfangsbereich umschließenden Linie verbunden ist, wobei der klappbar eingerichtete dreidimensionale Körper und der feststehende dreidimensionale Körper ineinandergreifen und den Ventilationsbereich gemeinsam in einer gegenseitigen Überlappung überdecken und bei Freigabe des Fangbandes der klappbar eingerichtete dreidimensionale Körper aus der Überlappung mit dem feststehenden dreidimensionalen Körper bewegt wird. Insoweit ist gegenüber der zuvor genannten Ausführungsform der streifenartige Überstand ersetzt durch einen zweiten dreidimensionalen Körper, der auf der Außenseite des Gassackes feststehend angebracht ist und die für die Abdeckung erforderliche Überlappung mit einem weiterhin klappbar eingerichteten dreidimensionalen Körper ausbildet.

Nach einem ersten Ausführungsbeispiel ist hierbei hinsichtlich der Ausgestaltung der dreidimensionalen Körper vorgesehen, dass die beiden ineinander greifenden dreidimensionalen Körper jeweils als Tetraeder ausgebildet sind, wobei in dem sich über das Gassackgewebe erhebenden Bereich des feststehenden, an zwei Dreieckseiten mit dem Gassackgewebe verbundenen Tetraeders eine Dreiecksfläche offen ausgebildet und der klappbar eingerichtete Tetraeder mit einer seiner Dreiecksflächen die offene Dreiecksfläche des feststehenden Tetraeders verschließt und mit seinen beiden anderen Dreiecksflächen eine Überlappung mit den beiden Dreiecksflächen des feststehenden Tetraeders ausbildet. Mit einer derartigen geometrischen Ausbildung ist der Vorteil verbunden, dass sich die jeweils aneinanderliegenden Dreiecksflächen der ineinandergreifenden beiden Tetraeder aufgrund des Gasdrucks gegenseitig abdichten.

Gemäß einer bevorzugten Ausführungsform ist dabei vorgesehen, dass der klappbar eingerichtete Tetraeder im Inneren des feststehenden Tetraeders angeordnet ist und das Fangband an der innen liegenden Spitze des klappbar eingerichteten Tetraeders befestigt ist, wobei die Durchführungsöffnung für das Fangband außerhalb des klappbar eingerichteten Tetraeders innerhalb des von dem feststehenden Tetraeder überdeckten Bereichs der Abdeckung angeordnet ist. Hiermit ist der Vorteil verbunden, dass bei dem Ausströmen von Gas durch den von den beiden dreidimensionalen Körpern abgedeckten Ventilationsbereich der Gasdruck die Dreiecksflächen des innenliegenden feststehenden Tetraeders gegen die Dreiecksflächen des außenliegenden, klappbar eingerichteten Tetraeders drückt, wodurch die Abdichtung des Ventilationsbereiches durch die von den beiden Tetraedern gebildete Abdeckung verbessert ist. Soweit bei dieser Ausführungsform die Durchführungsöffnung für das Fangband in dem von dem Tetraeder abgedichteten Bereich angeordnet ist, kann auf eine gesonderte Abdichtung dieser Durchführungsöffnung verzichtet werden.

Die Erfindung lässt sich auch mit anderen Ausgestaltungen von ineinander greifenden dreidimensionalen Körpern realisieren. Beispielhaft sei hier ein Ausführungsbeispiel der Erfindung angegeben, bei welchem die beiden ineinander greifenden dreidimensionalen Körper der Abdeckung jeweils als ineinander greifende und sich gegenseitig überlappende halbkugelförmige Schalen ausgebildet sind, deren jeweilige mit dem Gassackgewebe verbundene Grundlinien den wenigstens eine Ventilationsbereich gemeinsam umschließen.

Gemäß alternativen Ausführungsbeispielen kann schließlich vorgesehen sein, dass der Ventilationsbereich von einer einzigen, von den als Abdeckung wirkenden beiden dreidimensionalen Körpern abgedeckten Ventilationsöffnung gebildet ist, oder von einer Mehrzahl von Ventilationsöffnungen mit einem ggf. entsprechend kleineren Querschnitt, wobei die mehreren Ventilationsöffnungen von den beiden dreidimensionalen Körpern gemeinsam überdeckt sind. Soweit zur durch die Freigabe des Fangbandes herbeizuführenden Ventilation des Gassackes der klappbar eingerichtete dreidimensionale Körper aus seiner Überlappung mit dem Gassack bzw. dem feststehenden dreidimensionalen Körper bewegt wird, ist nach einem Ausführungsbeispiel der Erfindung vorgesehen, dass zur Begrenzung der Bewegung des klappbar eingerichteten dreidimensionalen Körpers an dem im Inneren des Gassacks verlaufenden Teil des Fangbandes eine sich bei Freigabe des lösbar gehalterten Endes des Fangbandes nach Durchrutschen eines vorgegebenen Fangbandabschnittes durch die Führung oder die Durchführungsöffnung gegenüber der Führung oder Durchführungsöffnung verhakende Stoppeinrichtung angeordnet ist. Hierdurch ist es möglich, die Endstellung des klappbar eingerichteten dreidimensionalen Körpers im Verhältnis zu dem Gassack bzw. dem feststehenden dreidimensionalen Körper festzulegen, so dass sich eine definierte Ausströmöffnung für das aus dem Ventilationsbereich austretende Gas ergibt bzw. sich Ausströmöffnungen ergeben und dadurch der bei Ventilation des Gassackes austretende Gasstrom in eine gewünschte Richtung, insbesondere von dem Fahrzeuginsassen weg, geleitet werden kann.

In der Zeichnung sind Ausführungsbeispiele der Erfindung wiedergegeben, welche nachstehend beschrieben sind. Es zeigen:
- Fig. 1: eine als dreidimensionaler Körper ausgebildete Abdeckung für die Ventilationsöffnung eines Gassackes in deren Schließstellung in einer Perspektivansicht bei unter Gasdruck stehendem und "aufgeblasenen" dreidimensionalen Körper,
- Fig. 2: den Gegenstand der Figur 1 bei einem teilweise Aufklappen des dreidimensionalen Körpers mit einer teilweisen Freigabe der Ventilationsöffnung,
- Fig. 3: den Gegenstand der Figur 2 bei einer noch fortgeschritteneren, fast vollständigen Freigabe der Ventilationsöffnung durch den dreidimensionalen Körper,
- Fig. 4: eine aus zwei ineinandergreifend angeordneten Tetraedern als dreidimensionalen Körpern gebildete Abdeckung für die eine Ventilationsöffnung bei einem Gassack in deren Schließstellung in einer Perspektivansicht,
- Fig. 5: die Abdeckung gemäß Figur 4 nach Auslösung der Ventilation mit dem von dem feststehenden ersten Tetraeder weggeklappten beweglichen zweiten Tetraeder,
- Fig. 6: die Anordnung der beiden Tetraeder auf der Außenseite des Gassackgewebes in einer schematischen Grundrissansicht,
- Fig. 7: den Gegenstand der Figur 6 mit einem aus mehreren Ventilationsöffnungen bestehenden Ventilationsbereich,
- Fig. 8: den Gegenstand der Figur 4 in einer schematischen Seitenansicht.

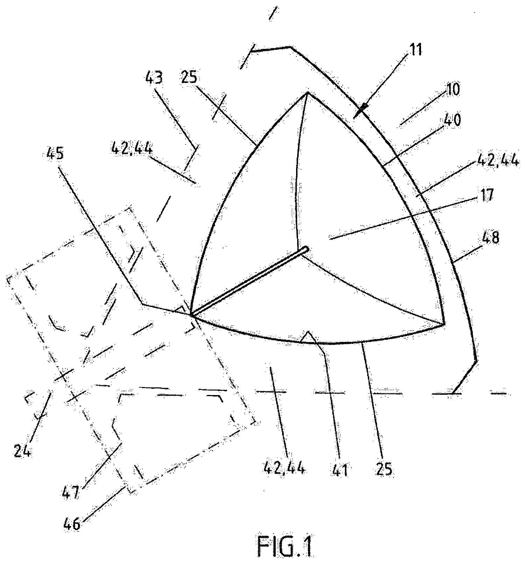

Wie sich zunächst aus Figur 1 ergibt, ist an einem von einem Gassackgewebe 10 gebildeten, im Einzelnen nicht dargestellten Gassack eine Abdeckung 11 befestigt, die aus einem ebenfalls aus textilem Gewebe gefertigten dreidimensionalen Körper 17 besteht, der in seinem entfalteten und in seine dreidimensionale Form gebrachten Zustand einen unter der Abdeckung 11 liegenden, bei dem dargestellten Ausführungsbeispiel als eine Ventilationsöffnung 25 ausgebildeten Ventilationsbereich verschließt bzw. freigibt.

Der als Tetraeder mit einer dreieckigen Grundfläche ausgeführte, klappbar eingerichtete dreidimensionale Körper 17 ist mit einem umlaufenden äußeren Randbereich 42 an dem Gassackgewebe 10 des Gassackes festgelegt. Dabei liegt der umlaufende äußere Randbereich 42 jeweils von innen her auf der Innenseite des Gassackgewebes 10 gegen das Gassackgewebe 10 an und bildet mit diesem einen umlaufenden Überlappungsbereich 44. Der dreidimensionale Körper 17 erstreckt sich dabei durch die Ventilationsöffnung 25 hindurch und deckt diese somit ab. Der dreidimensionale Körper 17 ist an seiner (rechten) äußeren Dreieckseite 40 fest mit dem Gassackgewebe 10 verbunden, vorzugsweise mittels einer Naht 48, so dass bei Einwirkung eines entsprechenden Gasdrucks der dreidimensionale Körper 17 um die Naht 48 aus der Zeichnungsebene heraus aufklappen kann. An den beiden anderen Dreieckseiten 41 des dreidimensionalen Körpers 17 sind die dortigen Randbereiche 42 nicht mit dem Gassackgewebe 10 verbunden, sondern bilden mit dem Gassackgewebe 10 die lösbare Überlappung 44 aus, die sich von dem Rand der Ventilationsöffnung 25 bis zu einer äußeren Linie 43 erstreckt. Im Bereich der der Dreieckseite 40 gegenüberliegenden Ecke 45 ist ein innenseitig im Gassack verlaufendes Fangband 24 an dem sich aus der Zeichnungsebene heraus erhebenden dreidimensionalen Körper 17 angeschlagen. Das Fangband 24 ist durch eine auf der Innenseite des Gassackes angebrachte Führung 46 geführt und seitlich von in der Führung 46 ausgebildeten Begrenzungen 47 eingefasst, so dass sich eine geradlinige Bewegung des Fangbandes 24 durch die Führung 46 ergibt.

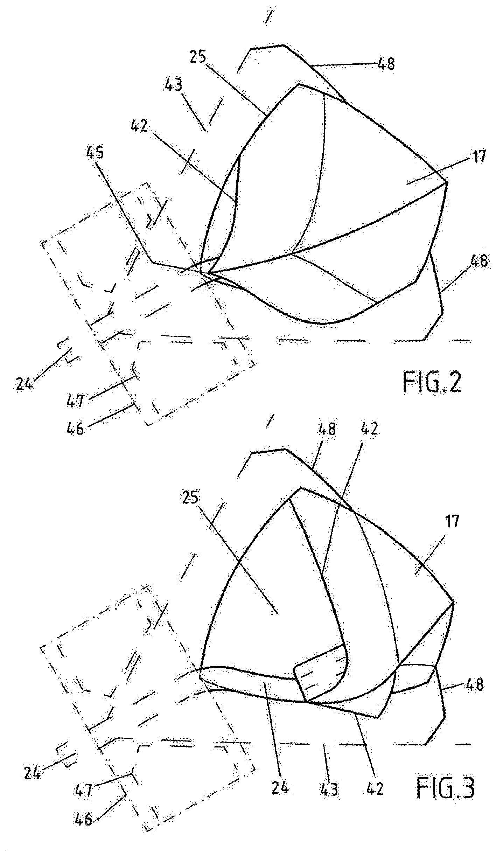

Die Funktion der in Figur 1 dargestellten Abdeckung ergibt sich aus einem Vergleich der Figuren 1 bis 3. Während in Figur 1 die Schließstellung des die Abdeckung 11 bildenden dreidimensionalen und klappbar eingerichteten Körpers 17 dargestellt ist, ist in dem in Figur 2 dargestellten Zwischenzustand das Fangband 24 bereits freigegeben, so dass das Fangband 24 durch die Führung 46 rutschen und der Klappbewegung des dreidimensionalen Körpers 17 um dessen Dreieckseite 40 nachgeben kann. Wie sich dazu aus Figur 2 ergibt, rutschen die an den beiden Dreieckseiten 41 ausgebildeten Randbereiche 42 jeweils aus ihrer Überlappung mit dem Gassackgewebe heraus, so dass der dreieckförmige Körper 17 durch die Ventilationsöffnung 25 nach außen aufklappen und die Ventilationsöffnung 25 freigeben kann.

Wie nicht weiter dargestellt bzw. lediglich zu dem nachfolgend beschriebenen Ausführungsbeispiel dargestellt ist, kann vorgesehen sein, dass die Stellung des klappbar eingerichteten dreidimensionalen Körpers 17 nach Freigabe des Fangbandes 24 relativ zum Gassackgewebe in einer definierten Lage festzulegen ist, wodurch einerseits die Ablenkungsrichtung des durch die Ventilationsöffnung 25 ausströmenden Gases beeinflusst oder auch der Querschnitt der Ventilationsöffnung begrenzt werden kann. Hierzu kann in dem Fangband 24 eine nicht weiter dargestellte Stoppvorrichtung in Form beispielsweise eines Knotens oder eines aufgesetzten Stoppkörpers vorgesehen sein, die beim Durchrutschen des Fangbandes 24 durch die Führung 46 sich in der Führung 46 festsetzt und damit eine weitere Bewegung des klappbaren dreidimensionalen Körpers 17 verhindert bzw. begrenzt.

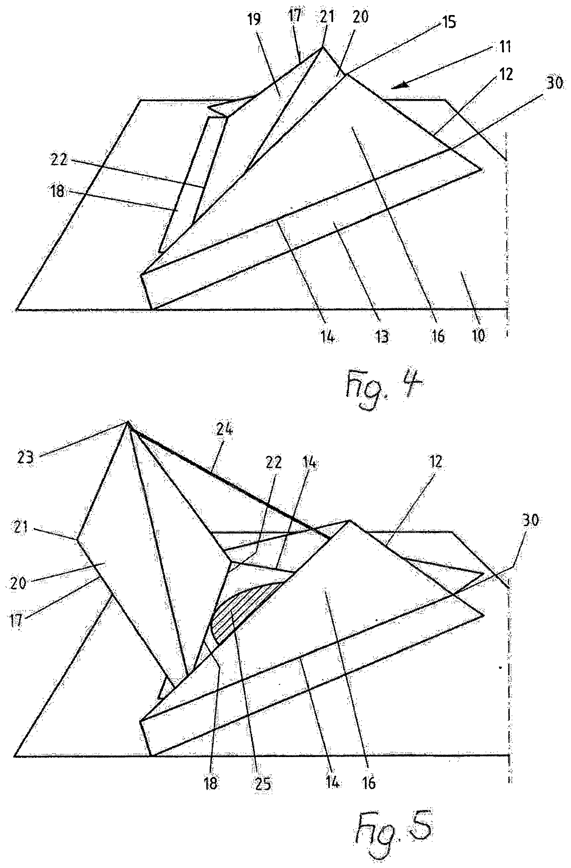

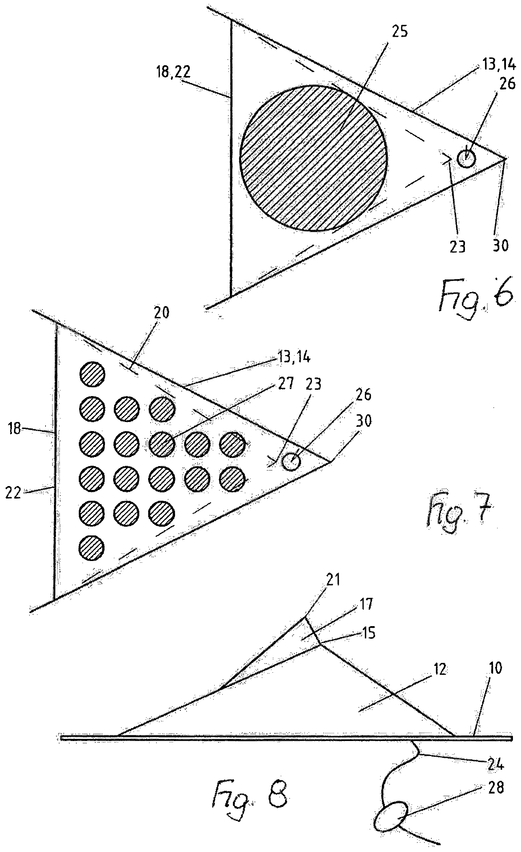

In den Figuren 4 bis 8 ist eine abgewandelte Ausführungsform der Erfindung wiedergegeben, bei welcher die Überlappung mit dem klappbar eingerichteten, nun auf der Außenseite des Gassackes angebrachten dreidimensionalen Körper 17 von einem zusätzlich ebenfalls auf der Außenseite des Gassackgewebes befestigten feststehenden dreidimensionalen Körper 12 gebildet ist, der ebenfalls als Tetraeder ausgebildet ist. Insofern besteht die Abdeckung 11 aus zwei ineinandergreifenden dreidimensionalen Körpern 12, 17.

Hier ist zunächst ein erster Tetraeder 12 mit seinen V-förmig angeordneten und die Ventilationsöffnung 25 zwischen sich einschließenden Dreieckseiten 13 über entsprechend angeordnete Nähte 14 mit dem Gassackgewebe 10 fest verbunden, sodass der eine obere Spitze 15 und seitliche Dreiecksflächen 16 aufweisende erste Tetraeder 12 als feststehender Tetraeder 12 zu bezeichnen ist, dessen der Spitze 30 der V-förmigen Dreiecksseiten 13 gegenüberliegender Bereich offen gehalten ist.

Dem feststehenden Tetraeder 12 ist ein zweiter klappbar eingerichteter Tetraeder 17 zugeordnet, der an einer Dreiecksseite 18 zur Ausbildung seiner Klapplinie mittels einer längs dieser Dreiecksseite 18 verlaufenden Naht 22 mit dem Gassackgewebe 10 verbunden ist, wobei die mit dem Gassackgewebe 10 verbundene Dreiecksseite 18 die bei dem feststehenden Tetraeder 12 offen belassene Dreiecksseite verschließt. Dementsprechend weist der klappbar eingerichtete Tetraeder 17 eine die offen belassene Dreiecksfläche des feststehenden Tetraeders 12 verschließende Dreiecksfläche 19 und entsprechend seitlich verlaufende Dreiecksflächen 20 auf, die eine Überlappung mit den Dreiecksflächen 16 des feststehenden Tetraeders 12 bilden, weil die vordere Spitze 23 des klappbar eingerichteten Tetraeders 17 im Inneren des feststehenden Tetraeders 12 liegt und wobei ein Abstand zwischen der vorderen Spitze 23 des klappbar eingerichteten Tetraeders 17 und der von den V-förmige Dreiecksseiten 13 gebildeten Spitze 30 des feststehenden Tetraeders 12 gegeben ist. Da der klappbar eingerichtete Tetraeder 17 nur längs seiner einen Dreiecksseite 18 mit dem Gassackgewebe verbunden ist, ist der Tetraeder 17 um diese Dreiecksseite 18 klappbar, so dass der Tetraeder 17 gegenüber dem Gassackgewebe 10 wie auch gegenüber dem feststehenden Tetraeder 12 beweglich ist und als beweglicher klappbar eingerichteter Tetraeder 17 bezeichnet ist.

An der innenliegenden vorderen Spitze 23 des beweglichen klappbar eingerichteten Tetraeders 17 ist das eine Ende eines Fangbandes 24 befestigt, welches durch eine in dem Gassackgewebe 10 ausgebildete und in dem zwischen den Spitzen 23 von beweglichem klappbar eingerichteten Tetraeder 17 und 30 von feststehendem Tetraeder 12 bestehenden Abstand angeordnete Durchführungsöffnung 26 in das Innere des Gassacks hineingeführt und mit dem nicht sichtbaren Ende an einer aus dem Stand der Technik bekannten Halteeinrichtung festgelegt ist.

Entsprechend der in der gattungsbildenden EP 1 790 538 A2 grundsätzlich beschriebenen Funktion einer bei einem Gassack eingerichteten Ventilationseinrichtung ist das Fangband 24 mit seinem im Inneren des Gassacks liegenden Bereich derart an der ebenfalls innenliegenden Halteeinrichtung befestigt, dass das an der vorderen Spitze 23 des beweglichen klappbar eingerichteten Tetraeders 17 befestigte Fangband 24 den Tetraeder 17 in der in Figur 1 dargestellten, mit dem feststehenden Tetraeder 12 überlappenden Lage hält, in welcher beide Tetraeder 12, 17 gemeinsam die Ventilationsöffnung 25 abdecken. Soweit der Gassack vor dem Aufblasen eingefaltet ist, sind die beiden Tetraeder 12, 17 mit dem Gassack gemeinsam zusammengefaltet, da diese ebenfalls aus einem textilen Material bestehen. Beim Aufblasen des Gassackes strömt Gas zunächst auch durch die Ventilationsöffnung 25 und faltet dabei zunächst die beiden Tetraeder 12, 1.7 auf. Allerdings ist ein weiteres Ausströmen von Gas anschließend nicht mehr möglich, weil in der durch das Fangband 24 vor Auslösung der Haltevorrichtung festgelegten Stellung der beiden Tetraeder 12, 17 gemäß Figur 1 die Ventilationsöffnung 25 vollständig abgedeckt und abgedichtet ist.

Wird zur Herbeiführung einer Ventilation des sich aufblasenden bzw. aufgeblasenen Gassackes das Ende des Fangbandes 24 von der Halteeinrichtung freigegeben, so rutscht das Fangband 24 durch die Durchführungsöffnung 26 hindurch, so dass unter dem weiterhin einwirkenden Gasdruck nunmehr der bewegliche klappbar eingerichtete Tetraeder 17 gegenüber dem feststehenden Tetraeder 12 aufklappt, wie dies in Figur 2 dargestellt ist. In dieser Stellung ist die Ventilationsöffnung 25 freigegeben.

Wie sich aus Figur 4 ergibt, kann der entsprechend vorgesehene Ventilationsbereich des Gassackes auch durch eine Mehrzahl von kleinen Ventilationsöffnungen 27 gebildet sein, ohne dass sich jedoch an der Ausbildung der aus den beiden Tetraedern 12, 17 gebildeten Abdeckung 11 etwas ändert. Wie sich aus Figur 5 ergibt, kann vorgesehen sein, dass die Stellung des beweglichen klappbar eingerichteten Tetraeders 17 nach Freigabe des Fangbandes 24 relativ zum feststehenden Tetraeder 12 in einer definierten Lage festzulegen ist, damit sich zwischen den beiden Tetraedern 12 und 17 gerichtete Gasausströmöffnungen einstellen, die je nach der Auslegung der beiden Tetraeder 12 und 17 einerseits und der durch die Bemessung der Länge des Fangbandes 24 festzulegenden Stellung des beweglichen klappbar eingerichteten Tetraeders 17 zum feststehenden Tetraeder 12 auslegbar sind. Somit kann beispielsweise der austretende Gasstrom von einem Fahrzeuginsassen weggelenkt werden. Wie sich aus Figur 5 ergibt, kann dazu an dem im Inneren des Gassacks verlaufenden Teil des Fangbandes 24 eine Stoppvorrichtung 28 angeordnet sein, die die Länge des durch die Durchführungsöffnung 26 hindurchrutschenden Fangbandes 27 begrenzt, so dass dadurch eine definierte Stellung des beweglichen klappbar eingerichteten Tetraeders 17 einstellbar ist.

## Patentansprüche

1. Gassackmodul zum Einbau in ein Kraftfahrzeug mit einem aus einem Gassackgewebe (10) bestehenden Gassack und mit einer Aufblasvorrichtung für den vor Auslösung gefalteten Gassack, wobei der Gassack einen vor dem Aufblasen des Gassackes mittels einer Abdeckung (11) verschlossenen Ventilationsbereich aufweist und ein mit seinem einen Ende im Inneren des Gassackes lösbar an dem Gassackmodul oder an einem fahrzeugfesten Teil gehaltertes und mit seinem anderen Ende an der Abdeckung (11) befestigtes Fangband (24) vorgesehen ist derart, dass bei sich aufblasendem Gassack vor der Freigabe des lösbar gehalterten Endes des Fangbandes (24) das Fangband (24) die Abdeckung (11) in der den Ventilationsbereich verschließenden Position hält, wobei die Abdeckung über wenigstens einen Teilbereich ihres Umfangs (40, 18) fest mit dem Gassackgewebe (10) verbunden und um diesen Teilbereich aufklappbar ist derart, dass bei Freigabe des Fangbandes (24) die Abdeckung durch Einwirkung des aus dem Ventilationsbereich ausströmenden Gases aufgeklappt wird und den Ventilationsbereich des Gassackes freigibt, wobei der nicht mit dem Gassack verbundene Umfangsbereich der Abdeckung in dessen Abdeckstellung in einer lösbaren Überlappung (44) mit einem Teil des Gassackes gehalten ist, **dadurch gekennzeichnet, dass** die Abdeckung als dreidimensionaler Körper (17) ausgebildet ist und das im Inneren des Gassackes verlaufende Fangband (24) innerhalb des von der Abdeckung (11) erfassten Bereichs an dem dreidimensionalen Körper (17) angeschlagen ist, so dass der dreidimensionale Körper (17) sich schon vor dessen Freigabe durch das Fangband (17) aufgrund seiner dreidimensionalen Ausbildung durch das durch den Ventilationsbereich strömende Gas als dreidimensionaler Körper entfaltet und in seine Form aufgeblasen wird, wobei sich ein ausreichend großer Gasdruck aufbaut, der im Falle der Freigabe durch das Fangband (24) ein reibungsloses Wegklappen des dreidimensionalen Körpers (17) mit einer vollständigen Freigabe des Ventilationsbereichs bewirkt.

2. Gassackmodul nach Anspruch 1, **dadurch gekennzeichnet, dass** der klappbar eingerichtete dreidimensionale Körper (17) mit einem umlaufenden äußeren Randbereich (42) auf der Innenseite des Gassackes innenseitig gegen das Gassackgewebe (10) anliegt und sich beim Aufblasen des Gassackes durch die Ventilationsöffnung (25) nach außen erstreckt, wobei der äußere Randbereich (42) auf einem Teilbereich (40) des Umfangs des klappbar eingerichteten dreidimensionalen Körpers (17) fest mit dem Gassackgewebe (10) verbunden und der nicht mit dem Gassackgewebe (10) verbundene Teilbereich (41) des Randbereichs (42) die lösbare Überlappung (44) mit dem Gassackgewebe (10) bildet und dass das Fangband (24) innenseitig an dem nicht mit dem Gassackgewebe (10) verbundenen Teilbereich (41) oder dem dreidimensionalen Körper (17) angeschlagen ist.

3. Gassackmodul nach Anspruch 2, **dadurch gekennzeichnet, dass** der klappbar eingerichtete dreidimensionale Körper (17) als ein eine dreieckige Grundfläche aufweisender Tetraeder ausgebildet ist, wobei eine Dreieckseite (40) des Tetraeders mit dem Gassackgewebe (10) fest verbunden und längs der beiden weiteren Dreieckseiten (41) jeweils die lösbare Überlappung (44) angeordnet ist.

4. Gassackmodul nach Anspruch 2 oder 3, **dadurch gekennzeichnet, dass** auf der Innenseite des Gassackgewebes (10) in dessen dem Anschlag des Fangbandes (24) an dem dreidimensionalen Körper (17) benachbarten Bereich eine das Fangband (24) aufnehmende Führung (46) angeordnet ist.

5. Gassackmodul nach Anspruch 1, **dadurch gekennzeichnet, dass** der klappbar eingerichtete dreidimensionale Körper (17) auf der Außenseite des Gassackes angebracht ist und dass zusätzlich zu dem klappbar eingerichteten dreidimensionalen Körper (17) ein zweiter feststehender dreidimensionaler Körper (12) vorgesehen und mit dem Gassackgewebe (10) längs einer den Ventilationsbereich auf dem von der Verbindung des Gassackgewebes (10) mit dem klappbar eingerichteten dreidimensionalen Körper (17) nicht erfassten Umfangsbereich umschließenden Linie verbunden ist, wobei der klappbar eingerichtete dreidimensionale Körper (17) und der feststehende dreidimensionale Körper (12) ineinandergreifen und den Ventilationsbereich gemeinsam in einer gegenseitigen Überlappung überdecken und bei Freigabe des Fangbandes (24) der klappbar eingerichtete dreidimensionale Körper (17) aus der Überlappung mit dem feststehenden dreidimensionalen Körper (12) bewegt wird.

6. Gassackmodul nach Anspruch 5, **dadurch gekennzeichnet, dass** die beiden ineinander greifenden dreidimensionalen Körper (12, 17) jeweils als Tetraeder ausgebildet sind, wobei in dem sich über das Gassackgewebe (10) erhebenden Bereich des feststehenden, an zwei Dreieckseiten (13) mit dem Gassackgewebe (10) verbundenen Tetraeders (12) eine Dreiecksfläche offen ausgebildet und der klappbar eingerichtete Tetraeder (17) mit einer (19) seiner Dreiecksflächen (19, 20) die offene Dreiecksfläche des feststehenden Tetraeders (12) verschließt und mit seinen beiden anderen Dreiecksflächen (20) eine Überlappung mit den beiden Dreiecksflächen (16) des feststehenden Tetraeders (12) ausbildet.

7. Gassackmodul nach Anspruch 5 oder 6, **dadurch gekennzeichnet, dass** der klappbar eingerichtete Tetraeder (17) im Inneren des feststehenden Tetraeders (12) angeordnet ist und das im Inneren des Gassacks verlaufende Fangband (24) durch eine außerhalb des klappbar eingerichteten Tetraeders (17), jedoch innerhalb des von dem feststehenden Tetraeder (12) überdeckten Bereichs der Abdeckung (11) angeordnete Durchführungsöffnung (26) nach außerhalb des Gassackes geführt und hier an der innenliegenden Spitze des klappbar eingerichteten Tetraeders (17) befestigt ist.

8. Gassackmodul nach Anspruch 5, **dadurch gekennzeichnet, dass** die beiden ineinander greifenden dreidimensionalen Körper (12, 17) der Abdeckung (11) jeweils als ineinander greifende und sich gegenseitig überlappende halbkugelförmige Schalen ausgebildet sind, deren jeweilige mit dem Gassackgewebe (10) verbundene Grundlinien den Ventilationsbereich gemeinsam umschließen.

9. Gassackmodul nach einem der Ansprüche 5 bis 8, **dadurch gekennzeichnet, dass** der Ventilationsbereich von einer von den beiden dreidimensionalen Körpern (12, 17) gemeinsam überdeckten Ventilationsöffnung (25) gebildet ist.

10. Gassackmodul nach einem der Ansprüche 1 bis 9, **dadurch gekennzeichnet, dass** zur Begrenzung der Bewegung des klappbar eingerichteten dreidimensionalen Körpers (17) an dem im Inneren des Gassacks verlaufenden Teil des Fangbandes (24) eine sich bei Freigabe des lösbar gehalterten Endes des Fangbandes (24) nach Durchrutschen eines vorgegebenen Fangbandabschnittes durch die Führung (46) oder die Durchführungsöffnung (26) gegenüber der Führung (46) oder Durchführungsöffnung (26) verhakende Stoppeinrichtung (28) angeordnet ist.

## Claims

1. Airbag module for installation in a motor vehicle with an airbag consisting of an airbag fabric (10) and with an inflation device for the airbag, which is folded prior to activation, wherein the airbag has a ventilation region closed by a cover (11) prior to inflation of the airbag, and a arrestor (24), with one end fixed detachably in the interior of the airbag on the airbag module or on a fixed vehicle part and its other end attached to the cover (11), is provided in such a way that while the airbag is inflating before the release of the detachably fixed end of the arrestor (24), the arrestor (24) holds the cover (11) in the position closing the ventilation region, wherein the cover is fixedly connected over at least a partial area of its circumference (40, 18) to the airbag fabric (10) and can be unfolded around this partial area in such a way that upon release of the arrestor (24), the cover is unfolded by the effect of the gas flowing out of the ventilation region and releases the ventilation region of the airbag, wherein the circumferential area of the cover not connected to the airbag is held in its covering position in a detachable overlap (44) with a part of the airbag, **characterised by** that the cover is formed as a three-dimensional body (17) and the arrestor (24) running in the interior of the airbag is fastened inside the area encompassed by the cover (11) on the three-dimensional body (17), so that the three-dimensional body (17) unfolds as a three-dimensional body already before its release by the arrestor (17) on account of its three-dimensional formation due to the gas flowing through the ventilation region and is inflated in its shape, wherein a sufficiently great gas pressure builds up, which in the event of the release by the arrestor (24) causes a frictionless folding out of the three-dimensional body (17) with a complete release of the ventilation region.

2. Airbag module according to claim 1, **characterised by** that the foldably configured three-dimensional body (17) rests with a circumferential outer edge area (42) on the inside of the airbag against the airbag fabric (10) on the inside and extends outwards upon inflation of the airbag through the ventilation opening (25), wherein the outer edge area (42) is fixedly connected to the airbag fabric (10) on a partial area (40) of the circumference of the foldably configured three-dimensional body (17) and the partial area (41) of the edge area (42) not connected to the airbag fabric (10) forms the detachable overlap (44) with the airbag fabric (10), and that the arrestor (24) is fastened on the inside on the partial area (41) not connected to the airbag fabric (10) or on the three-dimensional body (17).

3. Airbag module according to claim 2, **characterised by** that the foldably configured three-dimensional body (17) is formed as a tetrahedron comprising a triangular base area, wherein a triangle side (40) of the tetrahedron is fixedly connected to the airbag fabric (10) and the detachable overlap (44) is arranged respectively along the two other triangle sides (41).

4. Airbag module according to claim 2 or 3, **characterised by** that on the inside of the airbag fabric (10), in its area adjacent to the fastening of the arrestor (24) on the three-dimensional body (17), a guide (46) taking up the arrestor (24) is arranged.

5. Airbag module according to claim 1, **characterised by** that the foldably configured three-dimensional body (17) is affixed on the outside of the airbag and that in addition to the foldably configured three-dimensional body (17), a second fixed three-dimensional body (12) is provided and is connected to the airbag fabric (10) along a line enclosing the ventilation region on the circumferential area not encompassed by the connection of the airbag fabric (10) to the foldably configured three-dimensional body (17), wherein the foldably configured three-dimensional body (17) and the fixed three-dimensional body (12) engage in one another and jointly cover the ventilation region in a mutual overlap and upon release of the arrestor (24), the foldably configured three-dimensional body (17) is moved out of the overlap with the fixed three-dimensional body (12).

6. Airbag module according to claim 5, **characterised by** that the two three-dimensional bodies (12, 17) engaging in one another are formed respectively as tetrahedrons, wherein in the area of the fixed tetrahedron (12) connected on two triangle sides (13) to the airbag fabric (10), which area rises over the airbag fabric (10), a triangular surface is formed open and the foldably configured tetrahedron (17) closes the open triangular surface of the fixed tetrahedron (12) with one (19) of its triangular surfaces (19, 20) and with its two other triangular surfaces (20) forms an overlap with the two triangular surfaces (16) of the fixed tetrahedron (12).

7. Airbag module according to claim 5 or 6, **characterised by** that the foldably configured tetrahedron (17) is arranged in the interior of the fixed tetrahedron (12) and the arrestor (24) running in the interior of the airbag is guided through a through opening (26) arranged outside the foldably configured tetrahedron (17), but inside the area of the cover (11) covered by the fixed tetrahedron (12) to the outside of the airbag and is attached here to the internal tip of the foldably configured tetrahedron (17).

8. Airbag module according to claim 5, **characterised by** that the two three-dimensional bodies (12, 17) of the cover (11) engaging in one another are formed respectively as mutually overlapping hemispherical shells engaging in one another, the respective basic lines of which connected to the airbag fabric (10) jointly enclose the ventilation region.

9. Airbag module according to one of claims 5 to 8, **characterised by** that the ventilation region is formed by a ventilation opening (25) jointly covered by the two three-dimensional bodies (12, 17).

10. Airbag module according to one of claims 1 to 9, **characterised by** that to limit the movement of the foldably configured three-dimensional body (17) on the part of the arrestor (24) running in the interior of the airbag, a stop device (28) is arranged that catches relative to the guide (46) or guide opening (26) upon release of the detachably fixed end of the arrestor (24) after a predetermined arrestor section has slid through the guide (46) or the guide opening (26).

## Revendications

1. Module de sac gonflable destiné à être monté dans un véhicule automobile, comportant : un sac gonflable réalisé en tissu pour sac gonflable (10) et un dispositif de gonflage destiné au sac gonflable plié préalablement au déclenchement, ledit sac gonflable présentant une section de ventilation qui est obstruée au moyen d'un couvercle (11) avant le gonflage du sac gonflable, et une bande d'attache (24) étant prévue en étant supportée détachable, vis-à-vis du module de sac gonflable ou d'une partie solidaire du véhicule, par l'une de ses extrémités située à l'intérieur du sac gonflable et fixée au couvercle (11) par son autre extrémité, de telle manière que lors du gonflage du sac gonflable, préalablement à la libération de l'extrémité supportée de manière détachable de la bande d'attache (24), la bande d'attache (24) maintient le couvercle (11) dans la position obstruant la section de ventilation, ledit couvercle étant relié solidement au tissu pour sac gonflable (10) sur au moins une partie de son pourtour (40, 18) et étant rabattable autour de cette partie de manière que, lors de la libération de la bande d'attache (24), le couvercle est rabattu sous l'effet du gaz sortant de la section de ventilation et libère la section de ventilation du sac gonflable, ladite zone circonférentielle du couvercle non reliée au sac gonflable étant maintenue, dans sa position couvrante, en superposition amovible (44) avec une partie du sac gonflable, **caractérisé en ce que** le couvercle est conçu sous la forme d'un corps tridimensionnel (17) et **en ce que** la bande d'attache (24) parcourant l'intérieur du sac gonflable est apposée au corps tridimensionnel (17) à l'intérieur de la zone relative au couvercle (11), si bien que le corps tridimensionnel (17) se déplie, avant même sa libération par la bande d'attache (24), sous la forme d'un corps tridimensionnel du fait de sa conception tridimensionnelle, sous l'effet du gaz traversant la section de ventilation et est gonflé dans cette forme, une pression de gaz suffisamment importante se formant et occasionnant, en cas de libération par la bande d'attache (24), un escamotage sans frottement du corps tridimensionnel (17) avec libération totale de la section de ventilation.

2. Module de sac gonflable selon la revendication 1, **caractérisé en ce que** le corps tridimensionnel agencé pour être rabattable (17) est en contact, sur le côté intérieur, avec le tissu pour sac gonflable (10) par une zone de bord extérieure (42) périphérique sur le côté intérieur du sac gonflable et s'étend vers l'extérieur lors du gonflage du sac gonflable par l'ouverture de ventilation (25), ladite zone de bord extérieure (42) étant reliée solidement au tissu pour sac gonflable (10) sur une partie (40) du pourtour du corps tridimensionnel agencé pour être rabattable (17) et la partie (41) de la zone de bord (42) qui n'est pas reliée au tissu pour sac gonflable (10) formant la superposition amovible (44) avec le tissu pour sac gonflable (10), et **en ce que** la bande d'attache (24) est apposée, sur le côté intérieur, à la partie (41) qui n'est pas reliée au tissu pour sac gonflable (10) ou au corps tridimensionnel (17).

3. Module de sac gonflable selon la revendication 2, **caractérisé en ce que** le corps tridimensionnel agencé pour être rabattable (17) est conçu sous la forme d'un tétraèdre à base triangulaire, un bord de triangle (40) du tétraèdre étant solidement relié au tissu pour sac gonflable (10) et la superposition amovible (44) étant respectivement disposée le long des deux autres bords de triangle (41).

4. Module de sac gonflable selon la revendication 2 ou 3, **caractérisé en ce qu'**il est prévu un dispositif de guidage (46) recevant la bande d'attache (24) sur le côté intérieur du tissu pour sac gonflable (10), dans sa zone voisine de l'apposition de la bande d'attache (24) au corps tridimensionnel (17).

5. Module de sac gonflable selon la revendication 1, **caractérisé en ce que** le corps tridimensionnel agencé pour être rabattable (17) est appliqué sur le côté extérieur du sac gonflable et **en ce que,** en plus du corps tridimensionnel agencé pour être rabattable (17), il est prévu un deuxième corps tridimensionnel fixe (12), lequel est relié au tissu pour sac gonflable (10) le long d'une ligne entourant la section de ventilation sur la zone périphérique non relative à la liaison du tissu pour sac gonflable (10) avec le corps tridimensionnel agencé pour être rabattable (17), ledit corps tridimensionnel agencé pour être rabattable (17) et ledit corps tridimensionnel fixe (12) s'emboîtant l'un dans l'autre et recouvrant ensemble la section de ventilation dans une superposition mutuelle et, lors de la libération de la bande d'attache (24), le corps tridimensionnel agencé pour être rabattable (17) rompt la superposition avec le corps tridimensionnel fixe (12).

6. Module de sac gonflable selon la revendication 5, **caractérisé en ce que** les deux corps tridimensionnels (12, 17) emboîtés l'un dans l'autre sont chacun conçus sous forme de tétraèdre, en sachant que, dans la zone, qui est surélevée par rapport au tissu pour sac gonflable (10), du tétraèdre fixe (12) relié par deux bords de triangle (13) avec le tissu pour sac gonflable (10), une face triangulaire est conçue ouverte et le tétraèdre agencé pour être rabattable (17) obstrue par une (19) de ses faces triangulaires (19, 20) la face triangulaire ouverte du tétraèdre fixe (12) et forme par ses deux autres faces triangulaires (20) une superposition avec les deux faces triangulaires (16) du tétraèdre fixe (12).

7. Module de sac gonflable selon la revendication 5 ou 6, **caractérisé en ce que** le tétraèdre agencé pour être rabattable (17) est disposé à l'intérieur du tétraèdre fixe (12) et la bande d'attache (24) parcourant l'intérieur du sac gonflable est guidée par une ouverture de passage (26) vers l'extérieur du sac gonflable, laquelle ouverture de passage est disposée à l'extérieur du tétraèdre agencé pour être rabattable (17), mais à l'intérieur de la zone du couvercle (11) qui est recouverte par le tétraèdre fixe (12), et y est fixée à la pointe du tétraèdre agencé pour être rabattable (17) qui est située vers l'intérieur.

8. Module de sac gonflable selon la revendication 5, **caractérisé en ce que** les deux corps tridimensionnels (12, 17) emboîtés l'un dans l'autre du couvercle (11) sont chacun conçus sous la forme d'une coque hémisphérique destinée à s'emboîter en superposition avec l'autre, ces coques présentant des lignes de base reliées au tissu pour sac gonflable (10) qui entourent conjointement la section de ventilation.

9. Module de sac gonflable selon l'une des revendications 5 à 8, **caractérisé en ce que** la section de ventilation est constituée par une ouverture de ventilation (25) recouverte par les deux corps tridimensionnels (12, 17) conjoints.

10. Module de sac gonflable selon l'une des revendications 1 à 9, **caractérisé en ce que,** pour limiter la portée du corps tridimensionnel agencé pour être rabattable (17), il est prévu, sur la partie, appartenant à la bande d'attache (24), qui parcourt l'intérieur du sac gonflable, un dispositif d'arrêt (28) qui s'accroche vis-à-vis du dispositif de guidage (46) ou de l'ouverture de passage (26) lors de la libération de l'extrémité supportée de manière détachable de la bande d'attache (24) après coulissement d'une section prédéterminée de la bande d'attache dans le dispositif de guidage (46) ou l'ouverture de passage (26).
